# EUROPÄISCHE PATENTSCHRIFT

(11) **EP 3 049 706 B1**
(45) Veröffentlichungstag und Bekanntmachung des Hinweises auf die Patenterteilung: **27.06.2018**
(21) Anmeldenummer: 14789143.6
(22) Anmeldetag: 19.09.2014
(51) Int. Cl.: F16L 27/087, F16H 57/04

(54) **VORRICHTUNG ZUR ÖLFÜHRUNG IN EINEM FAHRZEUGGETRIEBE MIT WENIGSTENS ZWEI GEGENEINANDER BEWEGLICHEN ELEMENTEN UND MIT EINER HÜLSE**
DEVICE FOR CONDUCTING OIL IN A VEHICLE GEARBOX WITH AT LEAST TWO ELEMENTS WHICH CAN MOVE WITH RESPECT TO ONE ANOTHER AND WITH A SLEEVE
DISPOSITIF DE GUIDAGE D'HUILE DANS UNE BOÎTE DE VITESSES DE VÉHICULE COMPORTANT AU MOINS DEUX ÉLÉMENTS MOBILES L'UN PAR RAPPORT À L'AUTRE ET UN MANCHON

(30) Priorität: 25.09.2013 DE 102013219285
(43) Veröffentlichungstag der Anmeldung: 03.08.2016
(73) Patentinhaber: Schaeffler Technologies AG & Co. KG, 91074 Herzogenaurach (DE)
(72) Erfinder: DRASER, Georg, 90453 Nürnberg (DE); PSCHERER, Heidi, 91086 Aurachtal (DE)
(86) Internationale Anmeldenummer: PCT/DE2014/200485
(87) Internationale Veröffentlichungsnummer: WO 2015/043595

(56) Entgegenhaltungen:
- DE-A1-102011 076 796
- DE-B4-102007 048 124

## Beschreibung

### Gebiet der Erfindung

Die Erfindung betrifft eine Vorrichtung zur Ölführung in einem Fahrzeuggetriebe, wobei die Vorrichtung wenigstens zwei gegeneinander bewegliche Elemente und zumindest eine Hülse aufweist, und dabei die Hülse zwischen den Elementen angeordnet ist und wenigstens eines der Elemente und die Hülse formschlüssig aneinander gesichert sind, und wobei ein erstes Element der Elemente zumindest teilweise von der Hülse umgeben ist und ein zweites Element der Elemente die Hülse und das erste Element zumindest teilweise umgibt. Weiterhin betrifft die Erfindung eine Hülse für eine derartige Vorrichtung.

### Hintergrund der Erfindung

Hülsen, die in Vorrichtungen mit Drehdurchführungen eingesetzt werden können, sind in DE 10 2007 048 124 B4 beschrieben. Die Vorrichtung, durch die gewöhnlich Öl als Schmier- und oder Druckmedium geleitet wird, führt das Öl Schmierstellen oder Druckzylindern zum Betätigen von Kolben zu. Häufig ist eine Drehdurchführung, durch welche das Öl von einem rotierenden Element zu einem stehenden Element oder umgekehrt geleitet wird, Bestandteil der Vorrichtung. Rotierende Elemente sind zum Beispiel Getriebewellen und stehende Elemente sind Gehäuse des Getriebes. Die Vorrichtung ist durch eine Hülse und einen Gehäuseabschnitt eines Getriebes gebildet. Die Hülse ist ein dünnwandiges Bauteil aus Stahlblech. Der Einsatz von derartigen Hülsen, insbesondere in Gehäusen aus Leichtmetall kann dazu führen, dass sich der Sitz der Hülse sich bei Erwärmung im Fahrbetrieb lockert, weil sich das Gehäuse aufgrund des größeren Wärmeausdehnungskoeffizienten seines Materials mehr ausdehnt als die Hülse aus Stahl. Deshalb sind derartige Hülsen in dem Gehäuse aus Leichtmetall mittels wenigstens eines Sicherungselements gegen Verdrehen gesichert. Die Kanäle der Vorrichtung sind entweder ganz oder teilweise vom Material des Gehäuses bzw. Gehäuseabschnitts begrenzt, welches bei seiner Herstellung dementsprechend aufwändig und kostenintensiv vorbereitet werden muss. Die bisher bekannten Ölführungen des Standes der Technik werden durch Einbeziehung der Gehäuse und Wellen in die Gestaltung der dazu notwendigen Passagen erreicht. Dazu gehören Längs- und Querbohrungen, Längs-, Quer- und Umfangsnuten, die aufwändig spanabhebend eingebracht werden müssen. Darüber hinaus müssen Sitze und Dichtflächen für Ringdichtungen spanabhebend eingearbeitet werden.

### Beschreibung der Erfindung

Die Aufgabe der Erfindung ist es, eine Vorrichtung und eine Hülse für eine derartige Vorrichtung zu schaffen, in der die Sicherung der Hülse optimiert ist.

Die Aufgabe ist nach dem Gegenstand des Anspruchs 1 gelöst.

Die Erfindung sieht vor, dass die Hülse und wenigstens eines der Elemente mit mindestens zwei zueinander benachbarten Lappen formschlüssig gegen Verdrehen um die Rotations- bzw. Symmetrieachse und/oder gegen axiales Verschieben aneinander gesichert sind. Die Erfindung sieht weiterhin eine der Erfindung entsprechend gestaltete Hülse für die Vorrichtung vor. Jeder der Lappen der formschlüssigen Sicherung geht an einer Wurzel von der Wand der Hülse ab. Die Wurzel ist eine Biegekante oder Umformkante, an der der jeweilige Lappen einmaterialig mit dem Material der Hülse vereint ist und an der der Lappen von der Hülse abgeknickt ist. Von der Wurzel aus gesehen ragt der jeweilige Lappen über die Oberfläche der Hülse nach innen radial ins Innere der Hülse hinein oder nach außen radial über die Hülse hinaus. Der Lappen ist aus einem Abschnitt der Wand einer vorzugsweise hohlzylindrisch ausgebildeten Hülse durch Trennen hergestellt, wobei die einmaterialig ausgebildete Verbindung zwischen der Hülse und der jeweiligen Lasche an der Wurzel bestehen bleibt.

Bei der Herstellung des Sicherungselements wird ein Abschnitt aus Blech mit der Kontur der jeweiligen Lasche aus der Wand der Hülse freigeschnitten und dann nach außen oder innen durch Biegen oder Prägen durchgestellt. Danach verlaufen die Lappen von der jeweiligen Wurzel aus in eine andere Richtung als die Wand. Durch den Freischnitt ergibt sich an jeder der Wurzeln nach dem Durchstellen des Lappens ein radialer Durchbruch in der Wand der Hülse. Der Durchbruch schließt sich dem jeweiligen Lappen an. Das nicht mehr durch das Material der Hülse gefüllte Leervolumen des Durchbruchs ist mindestens so groß wie das Volumen, dass das Material der von der Wurzel abgehenden Lappen aufweist oder ist größer. Der Durchbruch ist zumindest in drei Richtungen von der Wand der Hülse begrenzt. In drei Richtungen dann, wenn der jeweilige Lappen am Rand der Hülse aus dem Material der Hülse freigeschnitten ist und der Rand dadurch in Umfangsrichtung unterbrochen ist. In die verbleibenden zwei Umfangs- bzw. Tangentialrichtungen und in eine axiale Richtung ist der Durchbruch durch das Material der Hülse und durch die Wurzeln begrenzt. Axial heißt in diesem Falle mit der Längs- oder Symmetrieachse der Hülse gleichgerichtet. Radial heißt quer zur Längsachse. Die Umfangsrichtung und Tangentialrichtung ist auf den Umfang des um die Längs- oder Symmetrieachse umlaufenden Querschnittsprofils der Hülse bezogen.

Die Lappen schließen axial mit dem Rand ab, wobei die Aussparung den Rand unterbricht.

Die Lappen stehen alternativ axial hinter dem Rand zurück, wobei der Rand von der Aussparung unterbrochen ist oder die Lappen zwischen den beiden entgegengesetzten Rändern der Hülse ausgebildet und die Aussparungen sind randseitig durch die Wand der Hülse begrenzt sind. Unter Lappen sind alle im wesentlichen quaderförmig oder zackenförmig ausgebildeten Lappen (engl. Tabs) zu verstehen, wie diese beispielsweise auch an Sicherungsblechen von Schraubverbindungen ausgebildet sind.

Die Wurzel jedes Lappens verläuft geradlinig in axiale Richtung und damit die Wurzeln der benachbarten Lappen zueinander parallel. Die Wurzeln des jeweiligen Lappens verlaufen alternativ schräg zur Längsrichtung oder sind beliebig gekrümmt.

Eine weitere Ausgestaltung der Erfindung sieht vor, dass beide zueinander benachbarten Lappen formschlüssig entweder in eine Ausnehmung des innen liegenden oder in eine Ausnehmung des außen liegenden Elements eingreifen. Das außen liegende Element umgibt wenigstens einen Abschnitt der Hülse umfangsseitig. Die Hülse und das außen liegende Element umgeben das innen liegenden Element zumindest abschnittsweise. Das außen liegende Element weist vorzugsweise eine innenzylindrische Fläche auf, die die Hülse umgibt oder in der die Hülse sitzt. Das innenliegende Element weist vorzugsweise eine außenzylindrische Fläche auf, die von der Hülse umgeben ist und/oder auf der die Hülse sitzt. Das innere Element ist gegenüber dem äußeren Element um die Längs- oder Symmetrieachse verschwenkbar und/oder verschiebbar. Alternativ ist das äußere Element gegenüber dem inneren Element verschwenk- und oder verschiebbar. Es sind alternativ beide Elemente in diesem Sinne gegeneinander beweglich. Das außen liegende Element ist z.B. ein Gehäuseabschnitt eines Gehäuses eines Fahrzeuggetriebes. Das innen liegende Element ist eine Welle oder ein Zapfen bzw. ein Kolben eines Fahrzeuggetriebes. Es ist auch denkbar, dass zwischen Hülse und innerem Element Dichtringe angeordnet sind.

Die Hülse ist aus Stahlblech hergestellt. Der Werkstoff der Wellen, Zapfen und Kolben ist aus Stahl oder Leichtmetall. Der Werkstoff des Gehäuses oder eines anderen außen sitzenden Elements ist Stahl. Alternativ und vorzugsweise ist der Werkstoff ein Leichtmetall, dessen Wärmeausdehnungskoeffizient größer ist als der von Stahl.

Eine erfindungsgemäße Vorrichtung kann einfach montiert werden, da die Sicherungselemente elastisch nachgiebig gestaltet werden können. Darüber hinaus ist der Formschluss durch zwei Lappen sicherer. Bei der Herstellung der Hülse wird Material gespart, da für den Zuschnitt des Materials für die Hülse kein Aufschlag für die Sicherungselemente berücksichtigt werden muss. Die Anlagefläche der Formschlusselemente ist gegenüber der Sicherung mit nur einem Lappen größer, so dass die Sicherung bei längerem Betrieb nicht ausgeschlagen werden kann.

### Beschreibung der Zeichnungen

Die Erfindung wird nachfolgend anhand von Ausführungsbeispielen näher erläutert.

**Figur 1** zeigt eine Vorrichtung 1 in einer Frontalansicht. Die Darstellungen, insbesondere die Details zur Ausbildung und Anordnung der Lappen sind nicht maßstäblich.

**Figur 2** zeigt einen Längsschnitt durch die Vorrichtung 1 entlang der Symmetrieachse 3 der Vorrichtung 1. Die Darstellungen, insbesondere die Details zur Ausbildung und Anordnung der Lappen sind nicht maßstäblich.

Die Vorrichtung 1 weist ein erstes Element 4 auf, das eine Welle 5 ist. Weiterhin ist die Vorrichtung 1 mit einem zweiten Element 6 versehen, welches ein Gehäuse 7 ist. Zwei Hülsen 8 und 9 sind zwischen den Elementen 4 und 6 angeordnet. Die Welle 5 ist um die Symmetrieachse 3 schwenkbar oder rotierbar relativ zu dem Gehäuse 7 beweglich angeordnet. Die Hülse 8 umgibt die Welle 5 umfangsseitig vollständig und ist von der Hülse 9 umgeben. Die Hülse 9 ist von dem zweiten Element 6 umfangsseitig vollständig umgeben. Möglicherweise ist ein Ringspalt zwischen der Hülse 6 und dem Element 6 ausgebildet oder nicht. Wenn ein Ringspalt ausgebildet ist, können auch Dichtungen zwischen der Hülse und einer Welle ausgebildet sein. Die Hülsen 8 und 9 sitzen ineinander und als Verbund mit einer Presspassung, einer Übergangspassung oder mit einer Spielpassung in dem Gehäuse 7. Die Hülse 8 ist mit mehreren radialen Durchgangslöchern 10, 11, 12 und 13 versehen, die mit nicht dargestellten Kanälen oder Ölbohrungen der Welle 5 korrespondieren. Das Durchgangsloch 10 führt in einen Kanal 2, der in der Hülse 9 als Durchgangsloch ausgebildet ist. Das Durchgangsloch 13 mündet in einen Kanal 14, der in der Hülse 9 umfangsgerichtet verläuft und der in eine umfangsseitig versetzt zu dem Durchgangsloch 13 angeordnete Ölbohrung 15 in dem Gehäuse 7 mündet.

Die Hülse 8 und die Hülse 9 sowie das Element 6 sind mit zwei zueinander benachbarten Lappen 16 formschlüssig gegen Verdrehen um die Symmetrieachse 3 und in eine axiale Richtung gegen Verschieben aneinander gesichert, in dem die Lappen 16 der Hülse 8 durch einen Durchbruch 21 in der Hülse 9 hindurch in eine Ausnehmung 22 formschlüssig eingreifen.

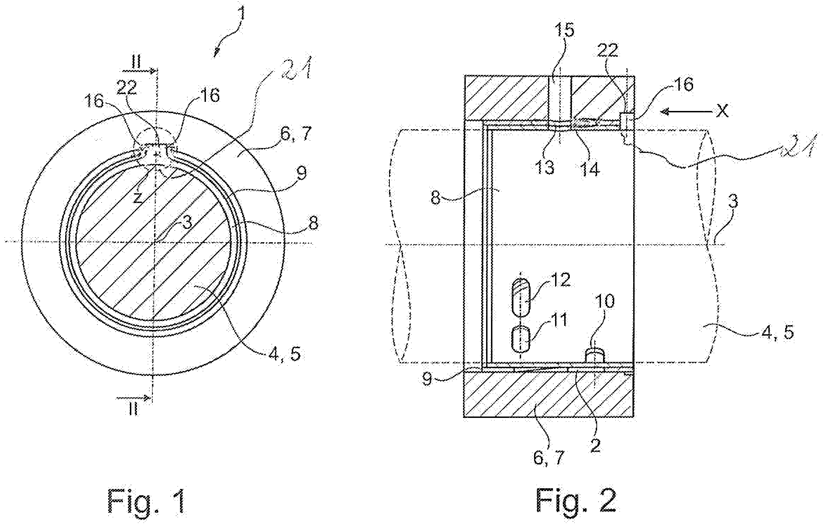

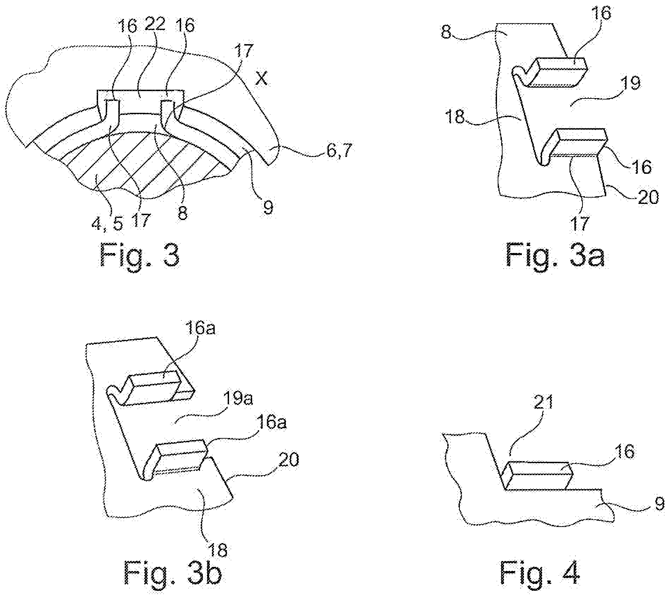

**Figur 3** zeigt eine nicht maßstäbliche Detaildarstellung der Ansicht X aus Figur 2.

Die Lappen 16 sind aus dem Blech der Hülse 8 gestanzt, wobei jeder der Lappen 16 an einer Wurzel 17 von der Wand 18 der Hülse 8 abgeht. Die beiden Lappen 16 liegen sich an einem gemeinsamen radialen Durchbruch 19 tangential des Umfangs der Hülsen 8 und 9 gegenüber, der am Rand 20 der Hülse 8 ausgebildet ist und der bei der Herstellung der Lappen 16 durch Stanzen und Biegen der Lappen 16 aus der Wand 18 der Hülse 8 entstanden ist. Die Wurzeln 17, die die Ränder des Durchbruchs 19 zwei Umfangsrichtungen begrenzen, sind die Biegekanten, um die die Lappen 16 bei der Herstellung der Lappen radial aus der Hülse 8 heraus gebogen wurden. In eine axiale Richtung ist der Rand des Durchbruchs 19 von dem Material der Hülse 8 begrenzt. Der Rand 20 der Hülse 8 ist durch den Durchbruch 19 umfangsseitig unterbrochen.

**Figur 3a** zeigt eine Detailansicht der Hülse 8, aus der ersichtlich ist, dass die Lappen 16 an dem Durchbruch 19 auf axialer Höhe mit dem Rand 20 der Hülse 8 abschließen. Die Darstellungen, insbesondere die Details zur Ausbildung und Anordnung der Lappen, sind nicht maßstäblich.

**Figur 3b** zeigt eine im Vergleich zu Figur 3a alternative Anordnung, in der die Lappen 16a an dem Durchbruch 19a axial hinter dem Rand 20 der Hülse 8 zurückstehen. Die Darstellungen, insbesondere die Details zur Ausbildung und Anordnung der Lappen sind nicht maßstäblich.

**Figur 4** zeigt ein Detail der Formschlusssicherung der Hülse 8, der Hülse 9 und des Gehäuses 7. Die zweite Hülse 9 weist auf Höhe des Durchbruchs 19 einen Durchbruch 21 auf. Die Lappen 16 greifen formschlüssig radial durch den Durchbruch 21 hindurch, stehen über die Hülse 9 hinaus und greifen gemeinsam formschlüssig in eine Ausnehmung 22 ein. Die Ausnehmung 22 ist in dem Gehäuse 7 ausgebildet, so dass die erste Hülse 8 und die zweite Hülse 9 gemeinsam in dem zweiten Element 6 gesichert sind.

Die Hülsen 8 und 9 sind aus Stahl. Der Werkstoff des Gehäuses 7 ist beispielsweise eine Leichtmetalllegierung, so dass der Werkstoff der Hülsen 8 und 9 einen anderen Wärmeausdehnungskoeffizienten aufweist als der Werkstoff des zweiten Elementes 6.

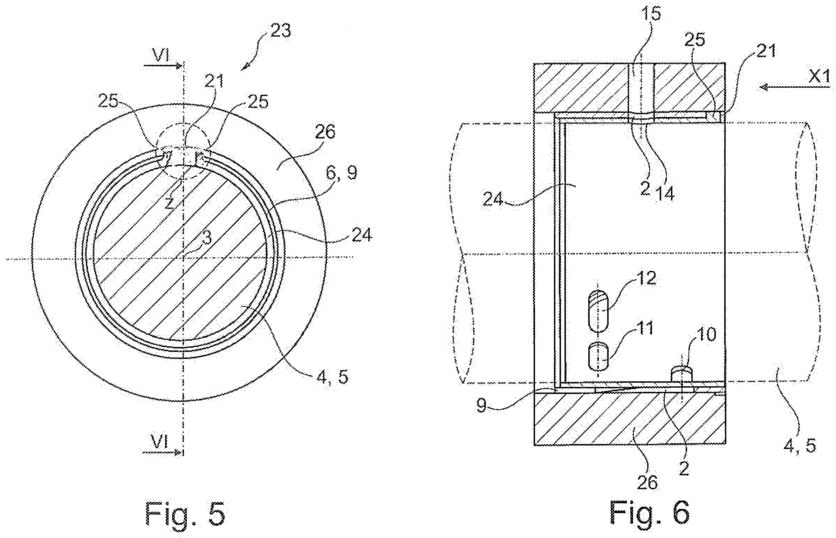

**Figur 5** zeigt eine Vorrichtung 23 in einer Frontalansicht. Die Darstellungen, insbesondere die Details zur Ausbildung und Anordnung der Lappen, sind nicht maßstäblich.

**Figur 6** zeigt einen Längsschnitt durch die Vorrichtung 23 entlang der Symmetrieachse 3 der Vorrichtung 23. Die Vorrichtung 23 weist ein erstes Element 4 auf, das eine Welle 5 ist. Weiterhin ist die Vorrichtung 23 mit einem zweiten Element 6 versehen, welches die Hülse 9 ist. Zwei Hülsen 24 und 9 sind zwischen dem Element 4 und einem Gehäuse 26 angeordnet. Die Welle 5 ist um die Symmetrieachse 3 schwenkbar oder rotierbar relativ zu dem Gehäuse 26 beweglich angeordnet. Die Hülse 24 umgibt die Welle 5 umfangsseitig vollständig und ist von der Hülse 9 umgeben. Die Hülse 9 ist von dem Gehäuse 26 umfangsseitig vollständig umgeben. Die Hülsen 24 und 9 sitzen ineinander und als Verbund mit einer Presspassung auf der Welle 5 und sind mit dieser um die Symmetrieachse 3 schwenkbar. Die Hülse 24 ist mit mehreren radialen Durchgangslöchern 10, 11, 12 und 13 versehen, die mit nicht dargestellten Kanälen oder Ölbohrungen der Welle 5 korrespondieren. Das Durchgangsloch 10 führt zum Beispiel in einen Kanal 2, der in der Hülse 9 als Durchgangsloch ausgebildet ist. Das Durchgangsloch 13 mündet in einen Kanal 14, der in der Hülse 9 umfangsgerichtet verläuft und der in eine umfangsseitig versetzt zu dem Durchgangsloch 13 angeordnete Ölbohrung 15 in dem Gehäuse 26 mündet.

Die Hülse 24 greift mit zwei zueinander benachbarten Lappen 25 formschlüssig in einen Durchbruch 21 an der Hülse 9 ein. Das Element 6 ist mittels des dadurch entstandenen Formschlusses an der Hülse 24 und gegen Verdrehen gegenüber der Hülse 24 sowie mittels des Presssitzes auf der Welle 5 gesichert.

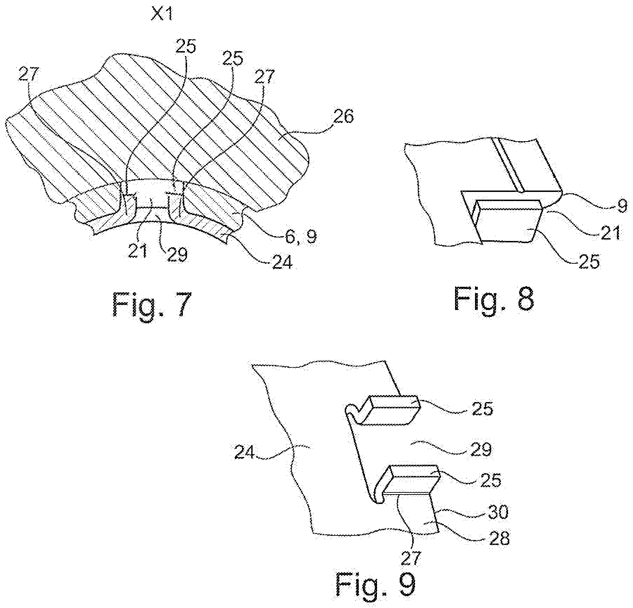

**Figur 7** zeigt eine nicht maßstäbliche Detaildarstellung der Ansicht X1 aus Figur 6. Die Darstellungen, insbesondere die Details zur Ausbildung und Anordnung der Lappen, sind nicht maßstäblich.

**Figur 9** zeigt ein Detail der Hülse 24 mit den Lappen 25. Die Lappen 25 sind aus dem Blech der Hülse 24 gestanzt, wobei jeder der Lappen 25 an einer Wurzel 27 von der Wand 28 der Hülse 24 abgeht. Die beiden Lappen 25 liegen sich an einem gemeinsamen radialen Durchbruch 29 tangential des Umfangs der Hülsen 24 und 9 gegenüber, der am Rand 30 der Hülse 24 ausgebildet ist und der bei der Herstellung der Lappen 25 durch Stanzen und Biegen der Lappen 25 aus der Wand 28 der Hülse 24 entstanden ist. Die Wurzeln 27, die die Ränder des Durchbruchs 29 zwei Umfangsrichtungen begrenzen, sind die Biegekanten, um die die Lappen 25 bei der Herstellung der Lappen radial aus der Hülse 24 heraus gebogen wurden. In eine axiale Richtung ist der Rand des Durchbruchs 29 von dem Material der Hülse 24 begrenzt. Der Rand 30 der Hülse 24 ist durch den Durchbruch 29 umfangsseitig unterbrochen. Figur 9 zeigt in der Detailansicht der Hülse 24, dass die Lappen 25 an dem Durchbruch 29 auf axialer Höhe mit dem Rand 30 der Hülse 24 abschließen.

**Figur 8** zeigt ein Detail der Formschlusssicherung der Hülse 24 in der Hülse 9.

Die zweite Hülse 9 weist auf Höhe des Durchbruchs 19 eine Ausnehmung 21 auf. Die Lappen 25 greifen gemeinsam formschlüssig radial in die Ausnehmung 21 hinein aber nicht hindurch und stehen dementsprechend auch nicht radial über die Hülse 9 hinaus.

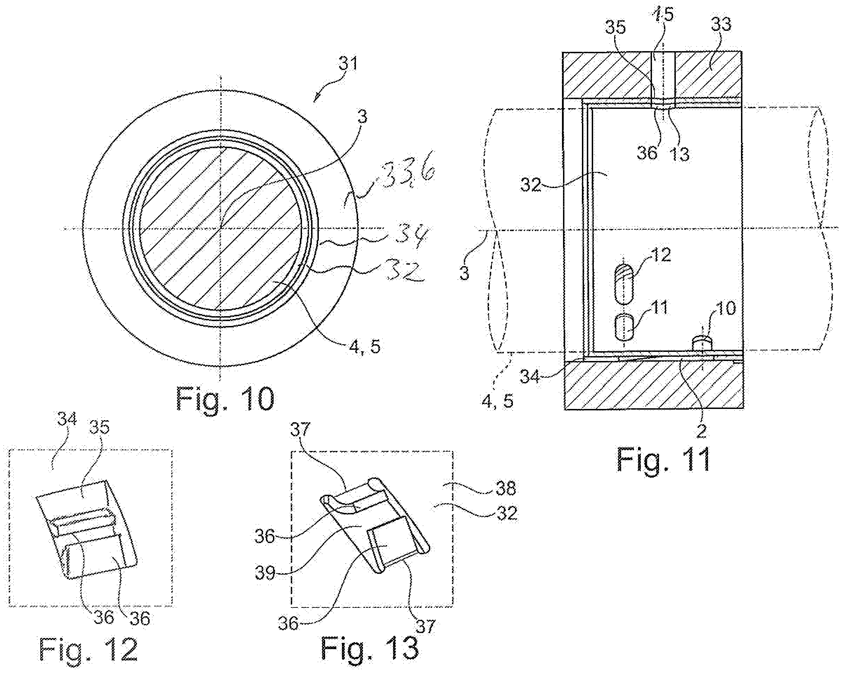

**Figur 10** zeigt eine Vorrichtung 31 in einer Frontalansicht.

**Figur 11** zeigt einen Längsschnitt durch die Vorrichtung 31 entlang der Symmetrieachse 3 der Vorrichtung 31.

Die Vorrichtung 31 weist ein erstes Element 4 auf, das eine Welle 5 ist. Weiterhin ist die Vorrichtung 31 mit einem zweiten Element 6 versehen, welches eine Hülse 34 ist. Zwei Hülsen 32 und 34 sind zwischen dem Element 4 und einem Gehäuse 33 angeordnet. Die Welle 5 ist um die Symmetrieachse 3 schwenkbar oder rotierbar relativ zu dem Gehäuse 33 beweglich angeordnet. Die Hülse 32 umgibt die Welle 5 umfangsseitig vollständig und ist von der Hülse 34 umgeben. Die Hülse 34 ist von dem Gehäuse 33 umfangsseitig vollständig umgeben. Die Hülsen 32 und 34 sitzen ineinander und als Verbund mit einer Presspassung, einer Übergangspassung oder mit einer Spielpassung in dem Gehäuse 33. Zwischen den Hülsen können auch Dichtringe angeordnet sein. Die Hülse 32 ist mit mehreren radialen Durchgangslöchern 10, 11, 12 versehen, die mit nicht dargestellten Kanälen oder Ölbohrungen der Welle 5 korrespondieren. Das Durchgangsloch 10 führt zum Beispiel in einen Kanal 2, der in der Hülse 34 als Durchgangsloch ausgebildet ist. Das Durchgangsloch 13 mündet in eine Ausnehmung 35, die in der Hülse 34 ausgebildet ist und die zu einer Ölbohrung 15 in dem Gehäuse 33 führt.

Die Hülse 32 ist mit zwei zueinander benachbarten Lappen 36 formschlüssig an dem Element 6 gegen Verdrehen um die Symmetrieachse 3 und in eine axiale Richtung gegen Verschieben gesichert, in dem die Lappen 36 formschlüssig in die Ausnehmung 35 der Hülse 34 eingeschnappt sind.

**Figur 13** zeigt ein Detail der Hülse 32 mit den Lappen 36. Die Lappen 36 sind aus dem Blech der Hülse 32 gestanzt, wobei jeder der Lappen 36 an einer Wurzel 37 von der Wand 38 der Hülse 32 abgeht. Die beiden Lappen 36 liegen sich an einem gemeinsamen radialen Durchbruch 39 in tangentialer Richtung gegenüber und sind aufeinander zu geneigt. Der allseitig von der Wand 38 der Hülse 32 begrenzte Durchbruch 39 ist bei der Herstellung der Lappen 36 durch Stanzen und Biegen der Lappen 36 aus der Wand 38 entstanden. Die Wurzeln 37, die die Ränder des Durchbruchs 39 tangential begrenzen, sind die Biegekanten, um die die Lappen 36 bei der Herstellung der Lappen 36 radial aus der Hülse 32 heraus gebogen wurden.

**Figur 12** zeigt ein Detail der Formschlusssicherung, mit denen die Hülsen 32 und 34 aneinander gesichert sind. Die zweite Hülse 34 weist auf Höhe des Durchbruchs 39 die Ausnehmung 35 auf. Die Lappen 36 greifen formschlüssig radial in die Ausnehmung 35 hinein.

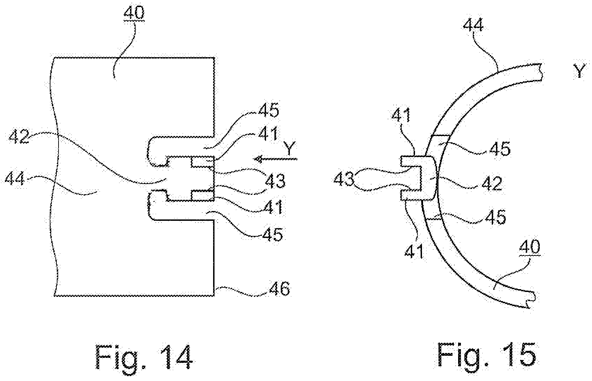

**Figur 14** zeigt ein Detail einer Hülse 40 für eine erfindungsgemäße Vorrichtung.

**Figur 15** zeigt die Ansicht Y des Details aus Figur 14.

Die Hülse 40 weist für eine Formschlusssicherung mit einem der Elemente zwei Lappen 41 auf, die von einer Zunge 42 abgehen. Die Lappen 41 und die Zunge 42 sind aus dem Material der Wand 43 der Hülse 40. Die Zunge 42 geht axial aus der Wand 43 hervor und ist beidseitig durch die Durchbrüche 45 begrenzt. Die Lappen 41 sind an den Wurzeln 44 von dem Rand der Zunge 42 aus radial nach außen abgeknickt. Jedem Lappen 41 bzw. jeder Wurzel 44 schließt sich tangential jeweils ein Durchbruch 45 an. Der Rand 46 der Hülse 40 ist umfangsseitig durch die Durchbrüche 45 unterbrochen.

**Bezugszeichen**

| | | | |
|---|---|---|---|
| 1 | Vorrichtung | 24 | Hülse |
| 2 | Kanal | 25 | Lappen |
| 3 | Symmetrieachse | 26 | Gehäuse |
| 4 | erstes Element | 27 | Wurzel |
| 5 | Welle | 28 | Wand |
| 6 | zweites Element | 29 | Durchbruch |
| 7 | Gehäuse | 30 | Rand |
| 8 | Hülse | 31 | Vorrichtung |
| 9 | Hülse | 32 | Hülse |
| 10 | Durchgangsloch | 33 | Gehäuse |
| 11 | Durchgangsloch | 34 | Hülse |
| 12 | Durchgangsloch | 35 | Ausnehmung |
| 13 | Durchgangsloch | 36 | Lappen |
| 14 | Kanal | 37 | Wurzel |
| 15 | Ölbohrung | 38 | Wand |
| 16 | Lappen | 39 | Durchbruch |
| 17 | Wurzel | 40 | Hülse |
| 18 | Wand | 41 | Lappen |
| 19 | Durchbruch | 42 | Zunge |
| 20 | Rand | 43 | Wurzel |
| 21 | Ausnehmung | 44 | Wand |
| 22 | Ausnehmung | 45 | Durchbruch |
| 23 | Vorrichtung | 46 | Rand |

## Patentansprüche

1. Vorrichtung (1, 23, 31) zur Ölführung in einem Fahrzeuggetriebe, wobei die Vorrichtung (1, 23, 31) wenigstens zwei gegeneinander bewegliche Elemente (4, 6) und zumindest eine Hülse (8, 24, 32, 40) aus Stahlblech aufweist, und dabei die Hülse (8, 24, 32, 40) zwischen den Elementen (4, 6) angeordnet ist und wenigstens eines der Elemente (4, 6) und die Hülse (8, 24, 32, 40) formschlüssig aneinander gesichert sind, und wobei ein erstes Element (4) der Elemente (4, 6) zumindest teilweise von der Hülse (8, 24, 32, 40) umgeben ist und ein zweites Element (6) der Elemente (4, 6) die Hülse (8, 24, 32, 40) und das erste Element (4) zumindest teilweise umgibt, **dadurch gekennzeichnet, dass** die Hülse (8, 24, 32, 40) mindestens zwei zueinander benachbarte Lappen (16, 36, 41) aufweist, die in wenigstens eine Ausnehmung (21, 22, 35) eines der Elemente (4, 6) eingreifen, wobei die Hülse (8, 24, 32, 40) und wenigstens eines der Elemente (4, 6) mittels der Lappen (16, 36, 41) formschlüssig aneinander gesichert sind, und wobei jeder der Lappen (16, 36, 41) an einer Wurzel (17, 37, 43) von der Wand (18, 38) der Hülse (8, 24, 32, 40) abgeht und dabei sich an jede der Wurzeln (17, 37, 43) ein radialer Durchbruch (19, 39, 45) in der Wand (18, 38, 44) der Hülse (8, 24, 32, 40) anschließt, wobei sich die Lappen (16, 36, 41) tangential des Umfangs der Hülse (8, 24, 32, 40) einander gegenüberliegen und dabei ein Volumen des Durchbruchs mindestens so groß ist wie ein Volumen der sich einander gegenüberliegenden Lappen.

2. Vorrichtung nach Anspruch 1, **dadurch gekennzeichnet, dass** beide zueinander benachbarten Lappen (16, 36, 41) gemeinsam formschlüssig in eine Ausnehmung (21, 22, 35) eines der Elemente (4, 6) eingreifen.

3. Vorrichtung nach Anspruch 2, **dadurch gekennzeichnet, dass** die Hülse (8, 24, 32, 40) mittels der Lappen (16, 36, 41) formschlüssig an dem zweiten Element (6) gesichert ist.

4. Vorrichtung nach Anspruch 1, **dadurch gekennzeichnet, dass** ein erster Werkstoff der Hülse (8, 24, 32, 40) einen ersten Wärmeausdehnungskoeffizienten aufweist, der sich von einem zweiten Wärmeausdehnungskoeffizienten eines zweiten Werkstoffes unterscheidet, wobei wenigstens eines der Elemente (4, 6) zumindest teilweise aus dem zweiten Werkstoff gebildet ist.

5. Vorrichtung nach Anspruch 1, 2, 3 oder 4, **dadurch gekennzeichnet, dass** sich an die Wurzeln (17, 37) ein Durchbruch (19, 39) anschließt, der in beide Umfangsrichtungen der Hülse (8, 24, 32) durch je eine der Wurzeln (17, 37) begrenzt ist.

6. Vorrichtung nach Anspruch 1, 2, 3 oder 4, **dadurch gekennzeichnet, dass** sich jeder Wurzel (43) jeweils in Umfangsrichtung ein Durchbruch (45) anschließt, wobei die Wurzeln (43) der zwei benachbarten Lappen (41) tangential oder umfangsgerichtet des Umfangs zwischen zwei der Durchbrüche (45) verlaufen.

7. Vorrichtung nach Anspruch 1, 2, 3 oder 4, **dadurch gekennzeichnet, dass** die Lappen (16, 36, 41) axial mit einem von zwei die Hülse (8, 24, 32) axial begrenzenden Rändern (20, 30) abschließen oder axial hinter dem Rand (20, 30) zurück stehen.

8. Vorrichtung nach Anspruch 1, 2, 3 oder 4, **dadurch gekennzeichnet, dass** der Durchbruch (19, 45) einen die Hülse (8, 24, 40) axial begrenzenden Rand (20, 30, 46) unterbricht.

## Claims

1. Apparatus (1, 23, 31) for conducting oil in a vehicle transmission, the apparatus (1, 23, 31) having at least two elements (4, 6) which can be moved counter to one another and at least one sleeve (8, 24, 32, 40) made from steel sheet, and the sleeve (8, 24, 32, 40) being arranged here between the elements (4, 6), and at least one of the elements (4, 6) and the sleeve (8, 24, 32, 40) being secured on one another in a positively locking manner, and a first element (4) of the elements (4, 6) being surrounded at least partially by the sleeve (8, 24, 32, 40), and a second element (6) of the elements (4, 6) surrounding the sleeve (8, 24, 32, 40) and the first element (4) at least partially, **characterized in that** the sleeve (8, 24, 32, 40) has at least two lobes (16, 36, 41) which adjoin one another and engage into at least one recess (21, 22, 35) of one of the elements (4, 6), the sleeve (8, 24, 32, 40) and at least one of the elements (4, 6) being secured on one another in a positively locking manner by means of the lobes (16, 36, 41), and each of the lobes (16, 36, 41) leading at a root (17, 37, 43) from the wall (18, 38) of the sleeve (8, 24, 32, 40), and a radial aperture (19, 39, 45) in the wall (18, 38, 44) of the sleeve (8, 24, 32, 40) adjoining each of the roots (17, 37, 43) here, the lobes (16, 36, 41) lying opposite one another tangentially with respect to the circumference of the sleeve (8, 24, 32, 40), and a volume of the aperture being at least as great here as a volume of the lobes which lie opposite one another.

2. Apparatus according to Claim 1, **characterized in that** the two lobes (16, 36, 41) which adjoin one another engage together in a positively locking manner into a recess (21, 22, 35) of one of the elements (4, 6) .

3. Apparatus according to Claim 2, **characterized in that** the sleeve (8, 24, 32, 40) is secured on the second element (6) in a positively locking manner by means of the lobes (16, 36, 41).

4. Apparatus according to Claim 1, **characterized in that** a first material of the sleeve (8, 24, 32, 40) has a first coefficient of thermal expansion which differs from a second coefficient of thermal expansion of a second material, at least one of the elements (4, 6) being formed at least partially from the second material.

5. Apparatus according to Claim 1, 2, 3 or 4, **characterized in that** the roots (17, 37) are adjoined by an aperture (19, 39) which is delimited in both circumferential directions of the sleeve (8, 24, 32) by way of in each case one of the roots (17, 37).

6. Apparatus according to Claim 1, 2, 3 or 4, **characterized in that** each root (43) is adjoined in each case in the circumferential direction by an aperture (45), the roots (43) of the two adjoining lobes (41) running tangentially or in a circumferentially directed manner with respect to the circumference between two of the apertures (45).

7. Apparatus according to Claim 1, 2, 3 or 4, **characterized in that** the lobes (16, 36, 41) terminate axially with one of two edges (20, 30) which delimit the sleeve (8, 24, 32) axially, or are set back axially behind the edge (20, 30).

8. Apparatus according to Claim 1, 2, 3 or 4, **characterized in that** the aperture (19, 45) interrupts an edge (20, 30, 46) which delimits the sleeve (8, 24, 40) axially.

## Revendications

1. Dispositif (1, 23, 31) de guidage d'huile dans une transmission de véhicule, le dispositif (1, 23, 31) présentant au moins deux éléments déplaçables l'un par rapport à l'autre (4, 6) et au moins une douille (8, 24, 32, 40) en tôle d'acier, et la douille (8, 24, 32, 40) étant disposée en l'occurrence entre les éléments (4, 6), et au moins l'un des éléments (4, 6) et la douille (8, 24, 32, 40) étant fixés l'un à l'autre par engagement par correspondance de formes, et un premier élément (4) des éléments (4, 6) étant entouré au moins partiellement par la douille (8, 24, 32, 40) et un deuxième élément (6) des éléments (4, 6) entourant au moins en partie la douille (8, 24, 32, 40) et le premier élément (4), **caractérisé en ce que** la douille (8, 24, 32, 40) présente au moins deux lobes (16, 36, 41) adjacents l'un à l'autre qui s'engagent dans au moins un évidement (21, 22, 35) de l'un des éléments (4, 6), la douille (8, 24, 32, 40) et au moins l'un des éléments (4, 6) étant fixés l'un à l'autre par engagement par correspondance de formes au moyen des lobes (16, 36, 41) et chacun des lobes (16, 36, 41) partant au niveau d'une racine (17, 37, 43) depuis la paroi (18, 38) de la douille (8, 24, 32, 40) et un orifice radial (19, 39, 45) dans la paroi (18, 38, 44) de la douille (8, 24, 32, 40) se raccordant à chacune des racines (17, 37, 43), les lobes (16, 36, 41) étant opposés l'un à l'autre tangentiellement à la périphérie de la douille (8, 24, 32, 40) et en l'occurrence un volume de l'orifice étant au moins aussi grand qu'un volume des lobes opposés l'un à l'autre.

2. Dispositif selon la revendication 1, **caractérisé en ce que** les deux lobes adjacents l'un à l'autre (16, 36, 41) s'engagent en commun par engagement par correspondance de formes dans un évidement (21, 22, 35) de l'un des éléments (4, 6).

3. Dispositif selon la revendication 2, **caractérisé en ce que** la douille (8, 24, 32, 40) est fixée au moyen des lobes (16, 36, 41) par engagement par correspondance de formes au deuxième élément (6).

4. Dispositif selon la revendication 1, **caractérisé en ce qu'**un premier matériau de la douille (8, 24, 32, 40) présente un premier coefficient de dilatation thermique qui est différent d'un deuxième coefficient de dilatation thermique d'un deuxième matériau, au moins l'un des éléments (4, 6) étant formé au moins en partie du deuxième matériau.

5. Dispositif selon la revendication 1, 2, 3 ou 4, **caractérisé en ce qu'**un orifice (19, 39) se raccorde aux racines (17, 37), lequel orifice est limité dans les deux directions périphériques de la douille (8, 24, 32) à chaque fois par l'une des racines (17, 37).

6. Dispositif selon la revendication 1, 2, 3 ou 4, **caractérisé en ce qu'**à chaque racine (43) se raccordent à chaque fois dans la direction périphérique un orifice (45), les racines (43) des deux lobes adjacents (41) s'étendant tangentiellement à la périphérie ou dans la direction de la périphérie entre deux des orifices (45) .

7. Dispositif selon la revendication 1, 2, 3 ou 4, **caractérisé en ce que** les lobes (16, 36, 41) se terminent axialement avec l'un de deux bords (20, 30) limitant axialement la douille (8, 24, 32) ou sont en retrait axialement derrière le bord (20, 30).

8. Dispositif selon la revendication 1, 2, 3 ou 4, **caractérisé en ce que** l'orifice (19, 45) interrompt un bord (20, 30, 46) limitant axialement la douille (8, 24, 40).
